(19) Europäisches Patentamt
European Patent Office
Office européen des brevets

(11) Veröffentlichungsnummer : **0 224 155**
**B1**

(12) **EUROPÄISCHE PATENTSCHRIFT**

(45) Veröffentlichungstag der Patentschrift : **14.02.90**

(51) Int. Cl.$^5$ : **C 09 B 62/085**, D 06 P 1/382

(21) Anmeldenummer : **86115880.6**

(22) Anmeldetag : **15.11.86**

(54) **Reaktivfarbstoffe.**

(30) Priorität : **28.11.85 DE 3542001**

(43) Veröffentlichungstag der Anmeldung : **03.06.87 Patentblatt 87/23**

(45) Bekanntmachung des Hinweises auf die Patenterteilung : **14.02.90 Patentblatt 90/07**

(84) Benannte Vertragsstaaten : **CH DE FR GB LI**

(56) Entgegenhaltungen :
**FR-A- 2 407 965**
**FR-A- 2 430 964**
**GB-A- 2 014 177**
**Die Akte enthält technische Angaben, die nach dem Eingang der Anmeldung eingereicht wurden und die nicht in dieser Patentschrift enthalten sind.**

(73) Patentinhaber : **BAYER AG**
**D-5090 Leverkusen 1 Bayerwerk (DE)**

(72) Erfinder : **Jäger, Horst, Dr.**
**Carl-Rumpff-Strasse 37**
**D-5090 Leverkusen (DE)**

**EP 0 224 155 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Farbstoffe der allgemeinen Formel

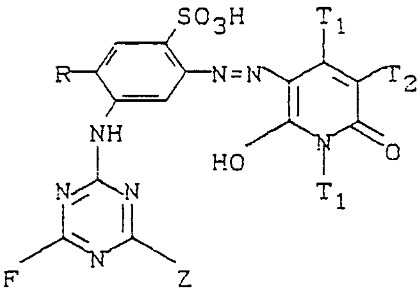

(I)

worin

$T_1$ = unabhängig voneinander H, $C_1$-$C_4$-Alkyl, gegebenenfalls substituiert durch OH, $OCH_3$, $OC_2H_5$, $SO_3H$, $OSO_3H$, $NHCOCH_3$, Cl, CN, COOH, Phenyl, gegebenenfalls substituiert durch $CH_3$, $C_2H_5$, $OCH_3$, $OC_2H_5$, $SO_3H$, COOH, Cl, Br, $NHCOCH_3$, $NHCONH_2$,

$T_2$ = H, $CONH_2$, Cl, Br,

R = H, $CH_3$,

Z = $Z_1$, wobei $Z_1$ = $—NR_1R_1$,

Z = $Z_2$, wobei

$Z_2$ = 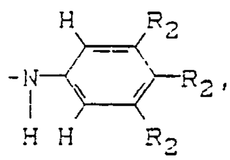 ,

Z = $Z_3$, wobei

$Z_3$ = 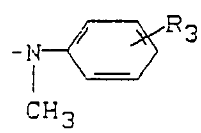 ,

Z = $Z_4$, wobei

$Z_4$ = 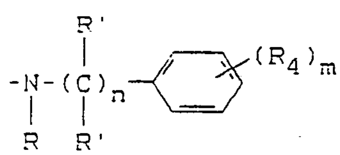

worin R die angegebene Bedeutung hat

R' = H oder ein geradliniger oder verzweigter Alkylrest,

$R_4$ = $NH_2$ oder $R_2$,

n = 1-4,

m = 1-3,

Z = $Z_5$, wobei

$Z_5$ = 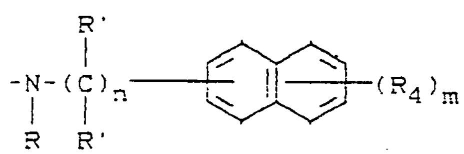

worin

$R_1$ = unabhängig von einander H, $C_1$-$C_4$-Alkyl, gegebenenfalls substituiert durch OH, $OCH_3$, $OC_2H_5$, $SO_3H$, $OSO_3H$, $NHCOCH_3$, Cl, CN, COOH bzw.

$NR_1R_1$ = 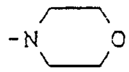,

$R_2$, $R_3$ = H, Halogen, $C_1$-$C_4$-Alkyl, $C_1$-$C_4$-Alkoxy, Acylamino, gegebenenfalls durch Sulfo, $CH_3$ oder $OCH_3$ substituiertes Phenylamino, Sulfo, Carboxy, Ureido

$R_4$ = $NH_2$ oder $R_2$.

Die Substituenten R', $R_2$ und $R_4$ können dabei gleich oder verschieden sein.

Besonders geeignete Substituenten $R_2$ und $R_3$ sind :

Cl, Br, $CH_3$, $C_2H_5$, $OCH_3$, $OC_2H_5$, $SO_2H$, COOH, $NHCOCH_3$, $NHCONH_2$,

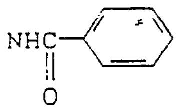 , 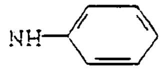 , 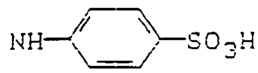

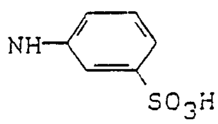 , 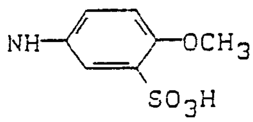

Im Rahmen der Formel (1) sind folgende Farbstoffe bevorzugt, in denen

$T_1$ = $CH_3$ oder $C_2H_5$

R = H

$T_2$ = $CONH_2$ oder H

Z = $Z_1$, $Z_2$, $Z_3$, $Z_4$ oder $Z_5$ und weiterhin solche, in denen

R' = H und solche, in denen mindestens ein Substituent $R_2$, $R_3$ oder $R_4$ eine $SO_3H$-Gruppe bedeutet.

Eine Reihe von bevorzugten Azofarbstoffen entspricht den folgenden Formeln :

(Siehe Formeln Seite 4 ff.)

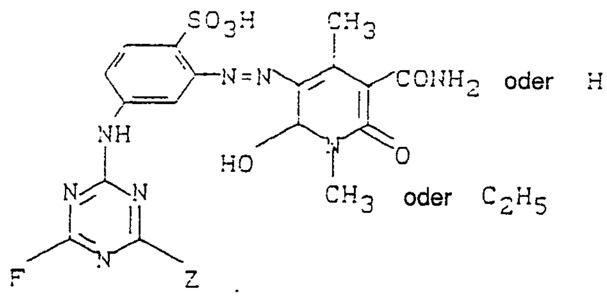

(2)

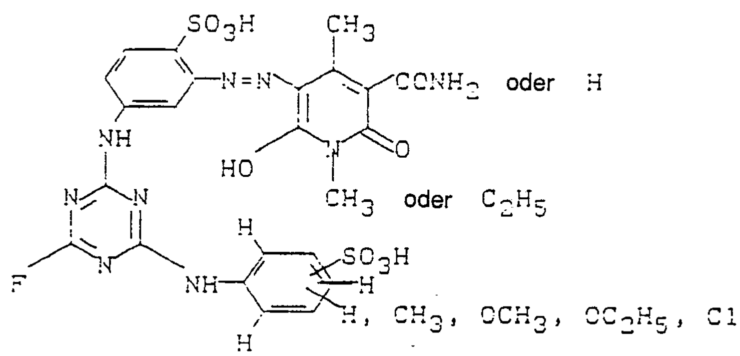

(3)

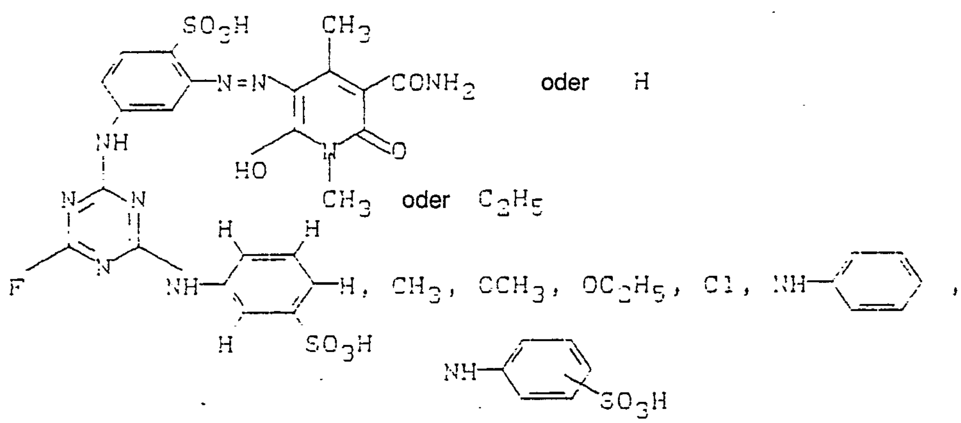

(4)

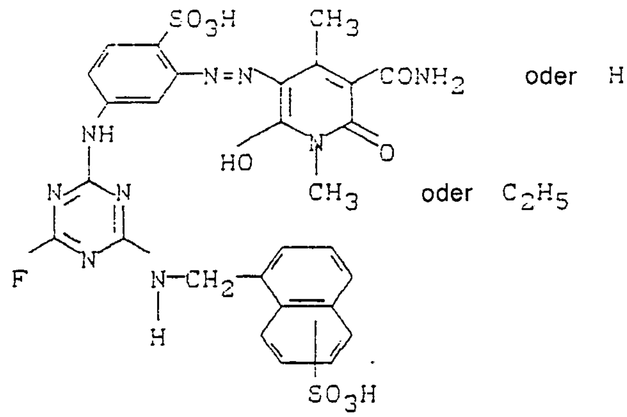

(8)

Gegenstand der Erfindung sind weiterhin Verfahren zur Herstellung der Azofarbstoffe der Formel (1). Im einzelnen sind folgende Varianten zu nennen :

a) Ein Aminoazofarbstoff der Formel

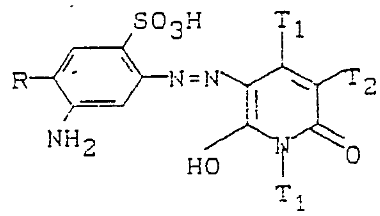

(9)

wird mit 2,4,6-Trifluortriazin acyliert und die resultierende Difluortriazinverbindung mit einem Amin der Formel

$$H-Z \qquad (10)$$

zu einem Farbstoff der Formel (1) kondensiert.

b) Ein Aminoazofarbstoff der Formel (9) wird mit einer Difluortriazinverbindung der Formel

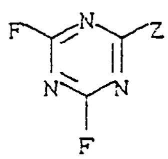

(11)

zu einem Farbstoff der Formel (1) kondensiert.

c) Die Diazoverbindung eines Amin der Formel

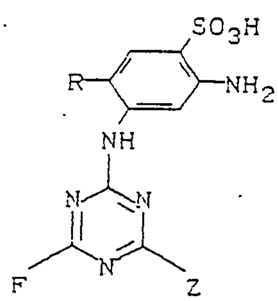

(12)

wird mit einem Pyridon der Formel

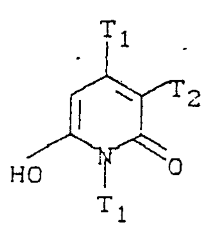

(13)

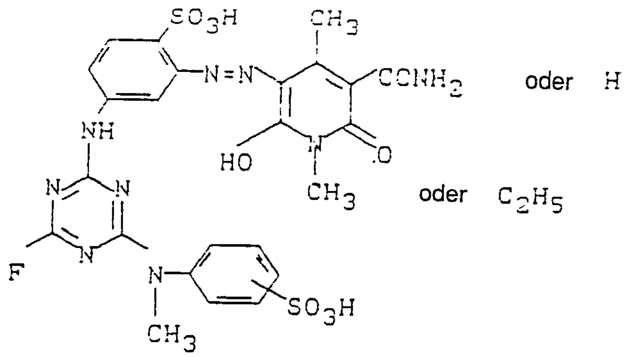

(5)

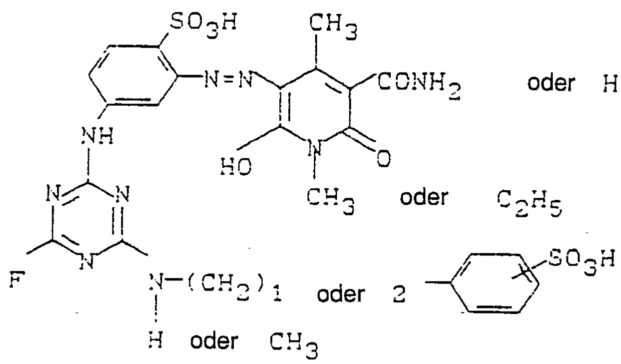

(6)

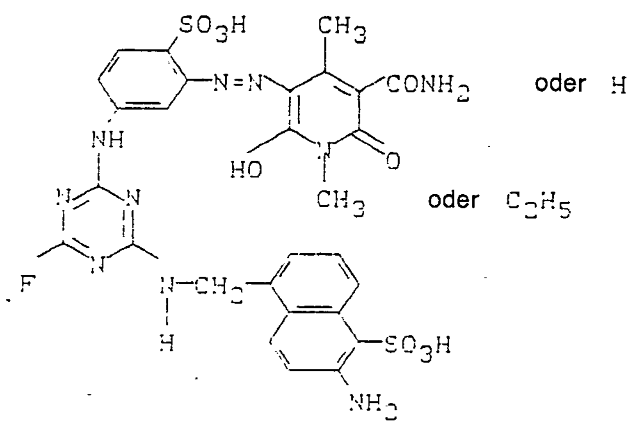

(7)

gekuppelt.

Das Verfahren nach a) ist die bevorzugte Variante.

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffe und Farbstoffzwischenprodukte vorzugsweise im wäßrigen Medium. Die Kondensation mit dem 2,4,6-Trifluortriazin erfolgt bei 0 °C im neutralen bis schwach sauren Medium, wobei die bei der Kondensation freiwerdende Flußsäure durch Zugabe von basischen Substanzen neutralisiert wird. Diese können sowohl in fester wie auch gelöster Form zugesetzt werden. Als Beispiel seien genannt ; LiOH, $Li_2CO_3$, NaOH, $Na_2CO_3$, $NaHCO_3$, KOH, $K_2CO_3$, MgO, $MgCO_3$, $Ca(OH)_2$, $CaCO_3$.

Die Farbstoffamine der Formel (9) erhält man durch Verseifen der entsprechenden N-Acyl-Verbindung in der Hitze mit verdünnten Säuren. Diese werden hergestellt durch Diazotieren von Aminen der Formel

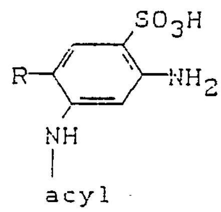

(14)

und Kuppeln auf Pyridone der Formel (13) im neutralen bis schwach sauren Medium.

Beispiele für Amine der Formel (14) sind folgende :

2-Amino-4-acetylamino-5-methyl-benzolsulfonsäure-1
2-Amino-4-acetylamino-benzolsulfonsäure-1
2-Amino-4-propionylamino-benzolsulfonsäure-1

Beispiel für Pyridone der Formel (13) sind folgende :

1-Ethyl-3-carbamoyl-4-methyl-6-hydroxy-pyridon-2
1-Methyl-3-carbamoyl-4-methyl-6-hydroxy-pyridon-2
1-Ethyl-3-carbamoyl-4-phenyl-6-hydroxy-pyridon-2
1-Ethyl-4-methyl-6-hydroxy-pyridon-2
1-Methyl-4-methyl-6-hydroxy-pyridon-2
3-Carbamoyl-4-methyl-6-hydroxy-pyridon-2
1-Ethyl-3-chlor-4-methyl-6-hydroxy-pyridon-2
1-β-Methoxyethyl-3-carbamoyl-4-methyl-6-hydroxy-pyridon-2
1-Carboxymethyl-3-carbamoyl-4-methyl-6-hydroxy-pyridon-2
1-Cyclohexyl-3-carbamoyl-4-methyl-6-hydroxy-pyridon-2
1-Isopropyl-3-carbamoyl-4-methyl-6-hydroxy-pyridon-2
1-Ethyl-3-carbamoyl-6-hydroxy-pyridon-2
1-(3'-Sulfophenyl)-3-carbamoyl-4-methyl-6-hydroxy-pyridon-2
1-Ethyl-3-carbamoyl-4-phenyl-6-hydroxy-pyridon-2.

Beispiele für Amine der Formel (10) sind folgende :

$$H—Z_1$$

$NH_3$, $CH_3NH_2$, $C_2H_5NH_2$, $HOCH_2CH_2NH_2$, $(HOCH_2CH_2)_2NH$, $HOOCCH_2NH_2$, $HO_3SCH_2CH_2NH_2$, $HO_3SOCH_2CH_2NH_2$,

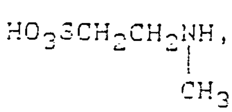 , 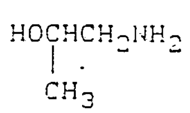 , 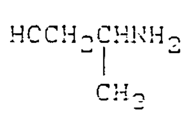 ,

$H_2NCH_2CH_2NHCOCH_3$ , 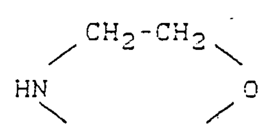 ,

$H-Z_2$:

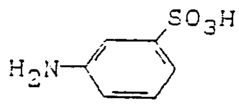, 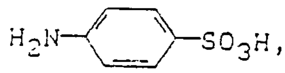, 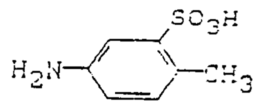

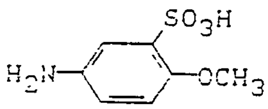, 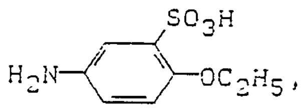, 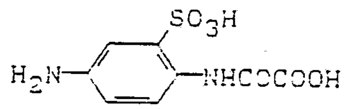

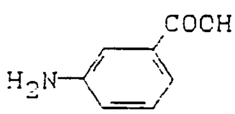, 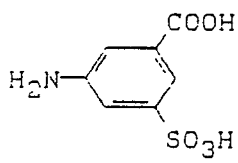, 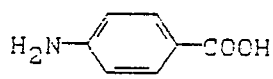

$H-Z_3$:

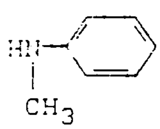, 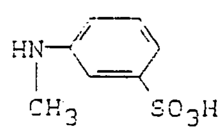

$H-Z_4$:

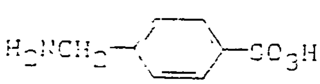, 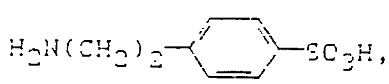,

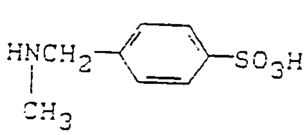, 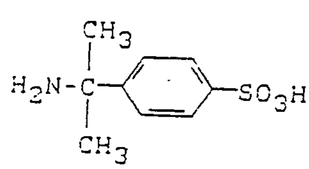

H-$Z_5$:

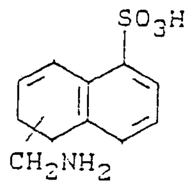,
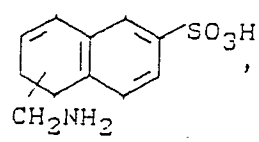,
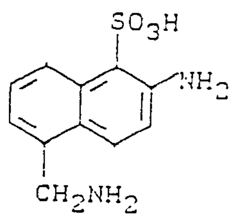

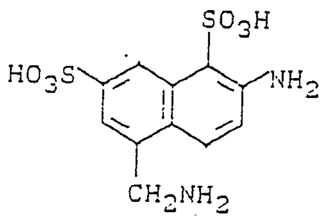.

Die Reaktivfarbstoffe der Formel (1) können isoliert und zu brauchbaren, trocknenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formel (1) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei gutem Auszieheigenschaften und hoher Farbstoff-Fixierung aufweisen, und daß sich die nicht fixierten Anteile leicht entfernen lassen. Die Färbungen sind ätzbar.

Die neuen Farbstoffe der Formel (1) eignen sich zum Färben und Bedrucken von Hydroxyl- oder Amidgruppen enthaltenden Materialien, wie Textilfaser-, Fäden und Geweben aus Wolle. Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säureebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahl beziehen sich auf Colour Index Hue Indication Chart (Indicator Numbers).

Aus der FR-A 2 407 965 sind Azo-Reaktivstoffe mit Pyridon-Kupplungskomonente und Fluortriazinyl-Reaktivrest bekannt, die sich von den erfindungsgemäßen Farbstoffe dadurch unterscheiden, daß der Sulfonaphthylaminorest direkt an den Triazinring gebunden ist.

Beispiel 1

0,1 mol des Farbstoffs der Formel

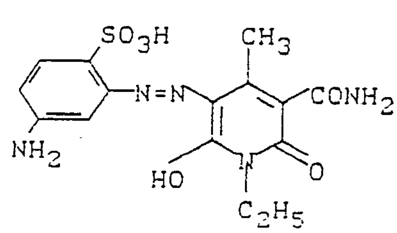

(erhalten durch Verseifung der entsprechenden N-Acetyl-Verbindung durch Erhitzen im sauren Medium) werden als Lithiumsalz in 1 l Eiswasser gelöst. Man tropft bei 0 °C 0,1 mol 2,4,6-Trifluortriazin ein und hält dabei den pH durch Eintropfen von Lithiumhydroxidlösung zwischen 6-7. Nach beendeter Acylierung

werden 0,1 mol Metanilsäure zugegeben. Man läßt die Temperatur auf 20 °C ansteigen und hält dabei den pH durch weitere Zugabe von Lithiumhydroxidlösung zwischen 6 und 7. Nach beendeter Acylierung wird der Farbstoff der Formel

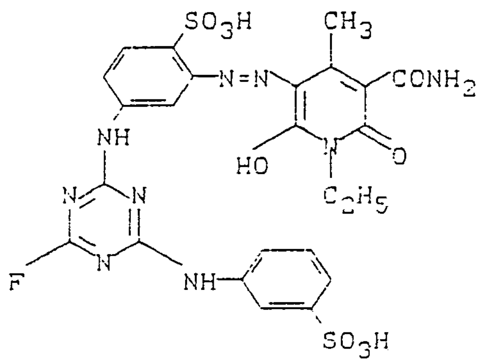

durch Zugabe von Kochsalz abgeschieden. Nach dem Absaugen, Trocknen und Mahlen erhält man ein leicht in Wasser mit gelber Farbe lösliches Farbstoffpulver. Es färbt Baumwolle nach einem der für Baumwollreaktivfarbstoffe üblichen Verfahren in kräftigen klaren stark grünstichig gelben Tönen mit der Farbkennzahl 1.

Weitere wertvolle Azofarbstoffe, die Baumwolle mit dem in Spalte 3 angegebenen Farbton färben, erhält man nach den Angaben von Beispiel 1, wenn die in Spalte 1 genannten Amine und die in Spalte 2 aufgeführten aminogruppenhaltigen Farbkörper verwendet werden.

Aus der FR-A-2 407 965 sind Azo-Reaktivfarbstoffe mit Pyridon-Kupplungskomponente und Fluortriazinyl-Reaktivrest bekannt, die sich von den erfindungsgemäßen Farbstoffen dadurch unterscheiden, daß der Sulfonaphthylaminorest direkt an den Triazinring gebunden ist.

(Siehe Tabellen Seite 11 ff.)

| Beispiel | Amin | aminogruppenhaltiger Farbstoff | Farbton | Farbkennzahl |
|---|---|---|---|---|
| 2 | Sulfanilsäure | 2-Sulfo-5-amino-phenyl-(1azo5)-1-ethyl-3-carbamoyl-4-methyl-6-hydroxy-pyridon-2 | stark grünst. gelb | 1 |
| 3 | 1-Amino 4-methyl-benzol-sulfonsäure-3 | " | " | 1 |
| 4 | 1-Amino-4-methoxy-benzol-sulfonsäure-3 | " | " | 1 |
| 5 | 1-Amino-4-ethoxy-benzol-sulfonsäure-3 | " | " | 1 |
| 6 | 1-Amino-4 (3'-sulfophenyl-amino)-benzolsulfonsäure-3 | " | " | 1 |
| 7 | 1-Amino-4 (4'-sulfophenyl-amino-)-benzolsulfonsäure-3 | " | " | 1 |
| 8 | 1-Amino-4-chlor-benzol-sulfonsäure-3 | " | " | 1 |
| 9 | 1 N Methylamino-benzolsul-fonsäure-4 | " | " | 1 |

| Beispiel | Amin | aminogruppenhaltiger Farbstoff | Farbton | Farbkennzahl |
|---|---|---|---|---|
| 10 | Metanilsäure | 2-Sulfo-5-amino-phenyl-(1azo5)-1-methyl-3 carbamoyl-4-methyl-6-hydroxy pyridon-2 | stark grünst. gelb | 1 |
| 11 | Sulfanilsäure | " | " | 1 |
| 12 | 1-Amino-4 methoxy-benzolsulfonsäure-3 | " | " | 1 |
| 13 | 1-Amino-4-methyl-benzolsulfonsäure-3 | " | " | 1 |
| 14 | 1 Amino 4 phenylamino-benzolsulfonsäure-3 | " | " | 1 |
| 15 | 1-Amino-4 (3'-sulfophenyl-amino-) benzolsulfonsäure-3 | " | " | 1 |
| 16 | 1-N-Methylamino-benzolsulfonsäure-4 | " | " | 1 |
| 17 | 1 Amino 4 (4' methoxy-phenyl amino-)benzolsulfonsäure-3 | " | " | 1 |

| Beispiel | Amin | aminogruppenhaltiger Farbstoff | Farbton | Farbkennzahl |
|---|---|---|---|---|
| 18 | Metanilsäure | 2-Sulfo-5-amino-phenyl-(1azo5)-1-ethyl-4-methyl-6-hydroxy-pyridon-2 | stark grünst. | 1 |
| 19 | Sulfanilsäure | " | " | 1 |
| 20 | 1-Amino-4-methoxy-benzol-sulfonsäure-3 | " | " | |
| 21 | Metanilsäure | 2-Sulfo-4-methyl-5-aminophenyl-(1azo5)-1-ethyl-3-carbamoyl-4-methyl-6-hydroxy-pyridon-2 | gelb | 2 |
| 22 | Sulfanilsäure | " | " | 2 |
| 23 | 1-Amino-4-methoxy-benzol-sulfonsäure-3 | " | " | 2 |
| 24 | Metanilsäure | 2-Sulfo-5-amino-phenyl-(1azo5)-1-ethyl-3-chlor-4-methyl-6-hydroxy-pyridon-2 | stark grünst. gelb | 1 |
| 25 | Sulfanilsäure | " | " | 1 |

Beispiel 26

0,1 mol des Farbstoffs der Formel

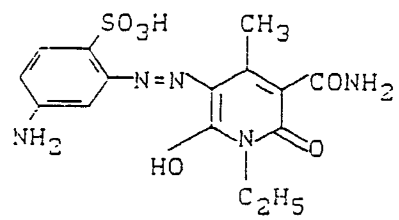

werden als Lithiumsalz in 1 l Eiswasser gelöst. Man tropft bei 0 °C 0,1 mol 2,4,6-Trifluortriazin ein und hält dabei den pH durch Eintropfen von Lithiumhydroxidlösung zwischen 6 und 7. Nach beendeter Acylierung wird eine alkalische Lösung des Lithiumsalzes des 2-Amino-1-sulfo-5-amino-methylnaphthalin bei 0 °C in dem Maße eingetropft, daß ein pH von 9 nicht überschritten wird. Anschließend führt man 0-5 °C und pH 8,5-9 die Kondensation durch weitere Zugabe einer Lithiumhydroxidlösung zu Ende.

Der Farbstoff der Formel

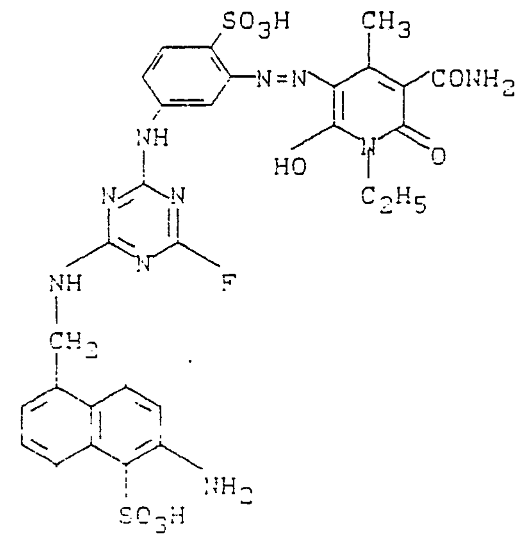

wird durch Zugabe von Kochsalz abgeschieden. Nach dem Absaugen, Trocknen und Mahlen erhält man ein leicht in Wasser mit gelber Farbe lösliches Farbstoffpulver. Er färbt Baumwolle nach einem der für Baumwollreaktivfarbstoffe üblichen verfahren in kräftigen klaren grünstichig gelben Tönen mit der Farbkennzahl 1. Weitere wertvolle Azofarbstoffe, die Baumwolle mit dem in Spalte 3 angegebenen Farbton färben, erhält man nach den Angaben von Beispiel 26, wenn die in Spalte 1 genannten Amine und die in Spalte 2 aufgeführten aminogruppenhaltigen Farbkörper verwendet werden.

(Siehe Tabellen Seite 15 ff.)

**Patentansprüche**

1. Farbstoffe der allgemeinen Formel

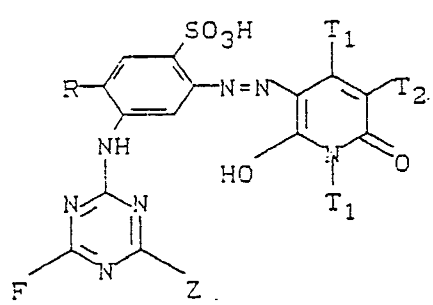

(I)

worin

$T_1$ = unabhängig voneinander H, $C_1$-$C_4$-Alkyl, gegebenenfalls substituiert durch OH, $OCH_3$, $OC_2H_5$, $SO_3H$, $OSO_3H$, $NHCOCH_3$, Cl, CN, COOH, Phenyl, gegebenenfalls substituiert durch $CH_3$, $C_2H_5$, $OCH_3$, $OC_2H_5$, $SO_3H$, COOH, Cl, Br, $NHCOCH_3$, $NHCONH_2$,

$T_2$ = H, $CONH_2$, Cl, Br,

R = H, $CH_3$,

| Beispiel | Amin | aminogruppenhaltiger Farbstoff | Farbton | Farbkennzahl |
|---|---|---|---|---|
| 27 | Taurin | 2-Sulfo-5-amino-phenyl-(1-azo5)-1-ethyl-3-carbamoyl-4-methyl-6-hydroxy-pyridon-2 | stark grünst. gelb | 1 |
| 28 | N-Methyltaurin | " | " | 1 |
| 29 | Ethanolamin | " | " | 1 |
| 30 | β-Sulfatoethyl-amin | " | " | 1 |
| 31 | 1-Aminomethyl-benzol-sulfonsäure-4 | " | " | 1 |
| 32 | x-Aminomethyl-naphthalin sulfonsäure-1 | " | " | 1 |
| 33 | x-Aminomethyl-naphthalin sulfonsäure-2 | " | " | 1 |
| 34 | Aminoessigsäure | " | " | " |
| 35 | 1-β Aminoethyl-benzol-sulfonsäure 4 | " | " | " |

| Beispiel | Amin | aminogruppenhaltiger Farbstoff | Farbton | Farbkennzahl |
|---|---|---|---|---|
| 36 | 2-Amino-5-aminomethyl-naphthalinsulfonsäure-1 | 2-Sulfo-5-amino-phenyl-(1azo5)-1-methyl-3-carbamoyl-4-methyl-6-hydroxy-pyridon-2 | stark grünst. gelb | 1 |
| 37 | 1-Aminomethyl-benzol-sulfonsäure-4 | " | " | 1 |
| 38 | 1-β-Aminoethyl-benzol-sulfonsäure-4 | " | " | 1 |
| 39 | " | 2-Sulfo-5-amino-phenyl-(1azo5)-1-isopropyl-3-carbamoyl-4-methyl-6-hydroxy-pyridon-2 | " | 1 |
| 40 | 2-Amino-5-aminomethyl-naphthalinsulfonsäure-1 | " | " | 1 |
| 41 | β-Sulfatoethylamin | 2-Sulfo-5-amino-phenyl-(1azo5)-1-methyl-3-carbamoyl-4-methyl-6-hydroxy-pyridon-2 | " | 1 |
| 42 | N-Methyltaurin | " | | |

$Z = Z_1$, wobei $Z_1 = -NR_1R_1$,
$Z = Z_2$, wobei

$Z_2$ = 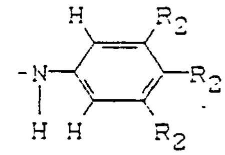

$Z = Z_3$, wobei

$Z_3$ = 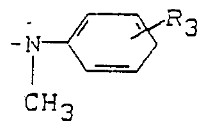

$Z = Z_4$, wobei

$Z_4$ = 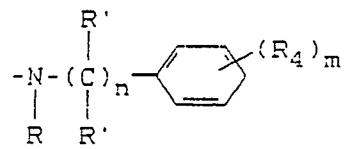

worin R die angegebene Bedeutung hat R' = H oder ein geradliniger oder verzweigter Alkylrest,
$R_4 = NH_2$ oder $R_2$,
n = 1-4
m = 1-3,
$Z = Z_5$, wobei

$Z_5$ = 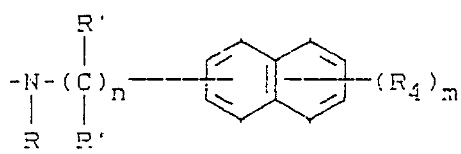

worin
$R_1$ = unabhangig von einander H, $C_1$-$C_4$-Alkyl, gegebenenfalls substituiert durch OH, $OCH_3$, $OC_2H_5$, $SO_3H$, $OSO_3H$, $NHCOCH_3$, Cl, CN, COOH bzw.

$NR_1R_1$ = 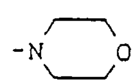,

$R_2$, $R_3$ = H, Halogen, $C_1$-$C_4$-Alkyl, $C_1$-$C_4$-Alkoxy, Acylamino, gegebenenfalls durch Sulfo, $CH_3$ oder $OCH_3$ substituiertes Phenylamino, Sulfo, Carboxy, Ureido
$R_4 = NH_2$ oder $R_2$.

2. Farbstoffe des Anspruchs 1 mit $T_1 = CH_2$ oder $C_2H_5$ ; R = H ; $T_2$ = H oder $CONH_2$, $Z = Z_1$, $Z_2$, $Z_3$, $Z_4$ oder $Z_5$.
3. Farbstoffe des Anspruchs 2, worin mindestens einer der Substituenten $R_2$, $R_3$ oder $R_4$ = Sulfo.
4. Farbstoffe der Ansprüche 1-3 mit R' = H.
5. Farbstoffe der Formeln

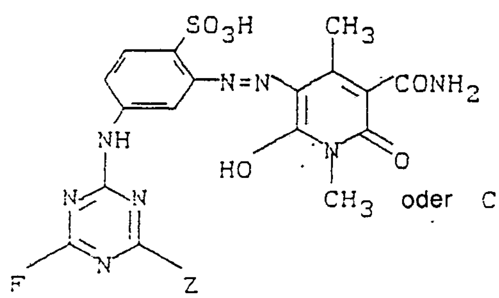
oder H
oder $C_2H_5$

(2)

worin

Z die in Anspruch 1 angegebene Bedeutung hat,

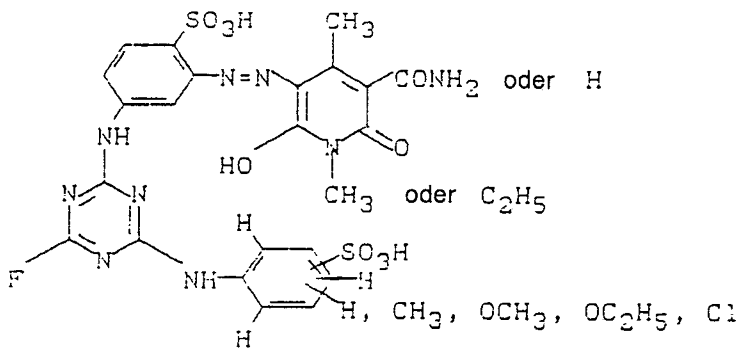

(3)

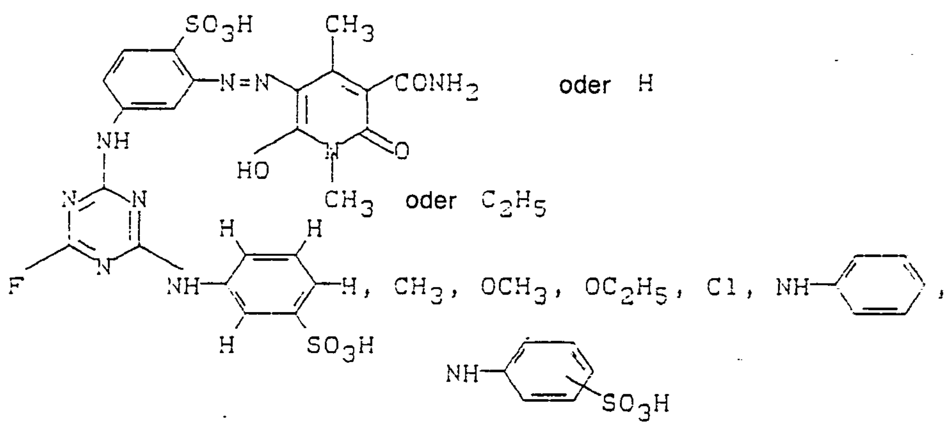

(4)

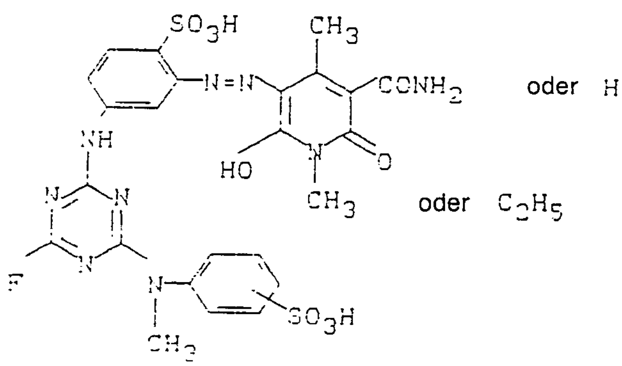

(5)

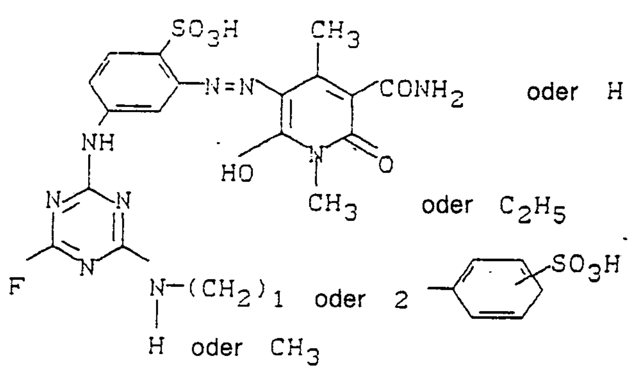

(6)

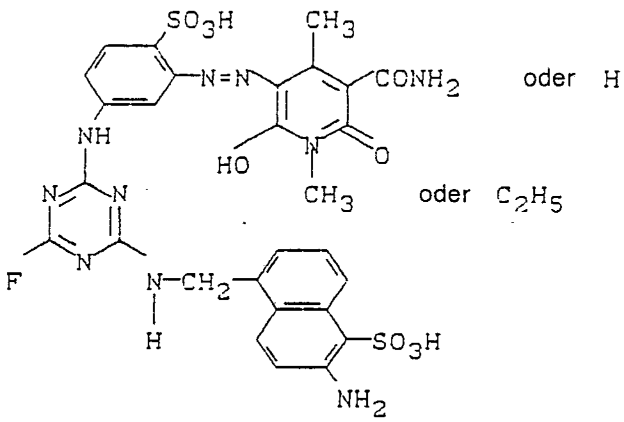

(7)

oder

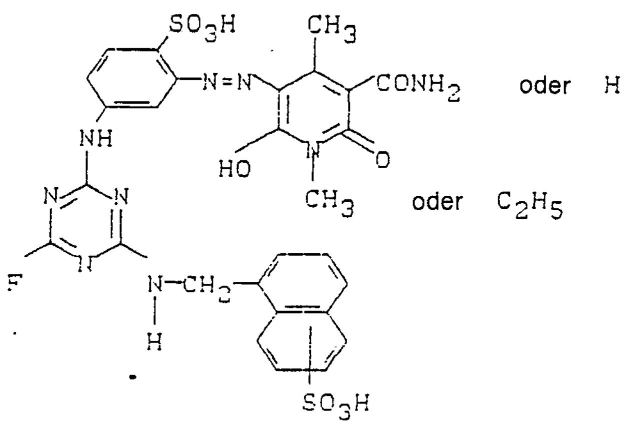

(8)

6. Verwendung der Farbstoffe der Ansprüche 1-5 zum Färben und Bedrucken von Hydroxylgruppen- und Amidgruppen enthaltenden Materialien.

**Claims**

1. Dyestuffs of the general formula

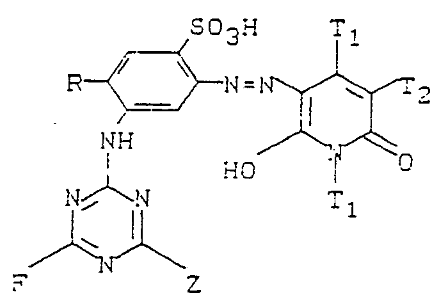

(I)

wherein

$T_1$ = independently of each other H, $C_1$-$C_4$-alkyl, optionally substituted by OH, $OCH_3$, $OC_2H_5$, $SO_3H$, $OSO_3H$, $NHCOCH_3$, Cl, CN, COOH, phenyl, optionally substituted by $CH_3$, $C_2H_5$, $OCH_3$, $OC_2H_5$, $SO_3H$, COOH, Cl, Br, $NHCOCH_3$, $NHCONH_2$,

$T_2$ = H, $CONH_2$, Cl, Br,

R = H, $CH_3$,

Z = $Z_1$, where $Z_1$ = $-NR_1R_1$,

Z = $Z_2$, where

$Z_2$ = 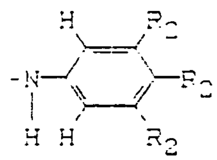

Z = $Z_3$, where

$Z_3$ = 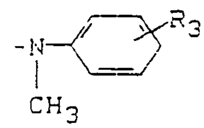

Z = $Z_4$, where

$Z_4$ = 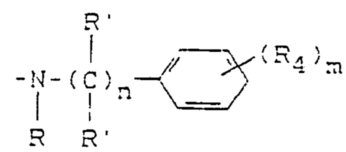

wherein R has the abovementioned meaning, R' = H or a straight-line or branched alkyl radical,

$R_4 = NH_2$ or $R_2$,

n = 1-4,

m = 1-3,

Z = $Z_5$, where

$Z_5$ = 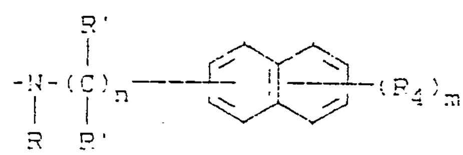

wherein

$R_1$ = independently of each other H, $C_1$-$C_4$-alkyl, optionally substituted by OH, $OCH_3$, $OC_2H_5$, $SO_3H$, $OSO_3H$, $NHCOCH_3$, Cl, CN, COOH or

$NR_1R_1$ = 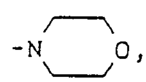,

$R_2$, $R_3$ = H, halogen, $C_1$-$C_4$-alkyl, $C_1$-$C_4$-alkoxy, acylamino, optionally sulpho-, $CH_3$- or $OCH_3$-substituted phenylamino, sulpho, carboxyl, ureido

$R_4 = NH_2$ or $R_2$.

2. Dyestuffs of Claim 1 with $T_1 = CH_3$ or $C_2H_5$ ; R = H ; $T_2$ = H or $CONH_2$, Z = $Z_1$, $Z_2$, $Z_3$, $Z_4$ or $Z_5$.

3. Dyestuffs of claim 2, wherein at least one of the substituents $R_2$, $R_3$ or $R_4$ = sulpho.

4. Dyestuffs of Claims 1-3 with R' = H.

5. Dyestuffs of the formulae

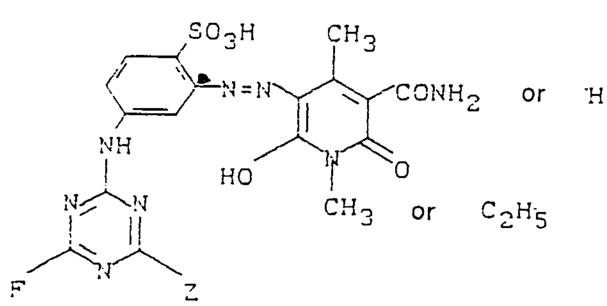 (2)

wherein

Z has the meaning indicated in Claim 1,

(See formulas page 21)

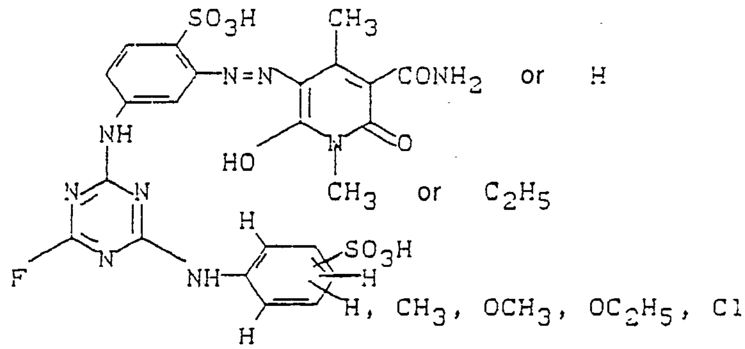

(3)

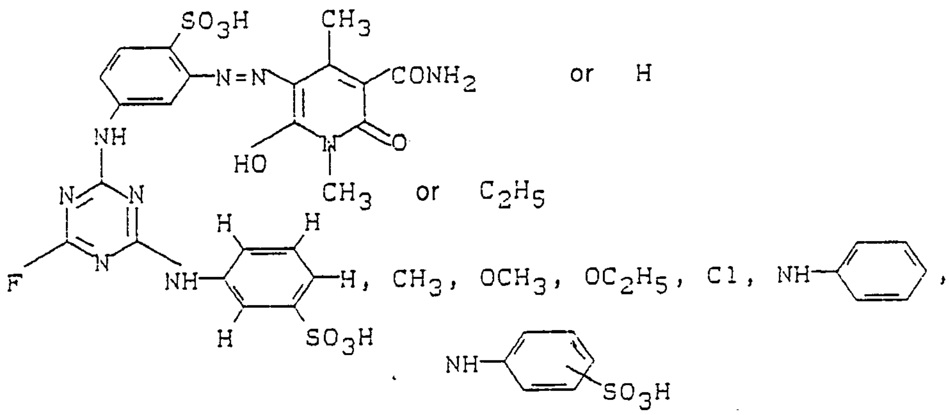

(4)

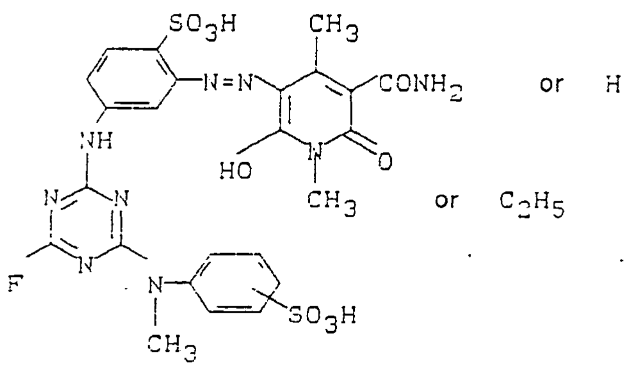

(5)

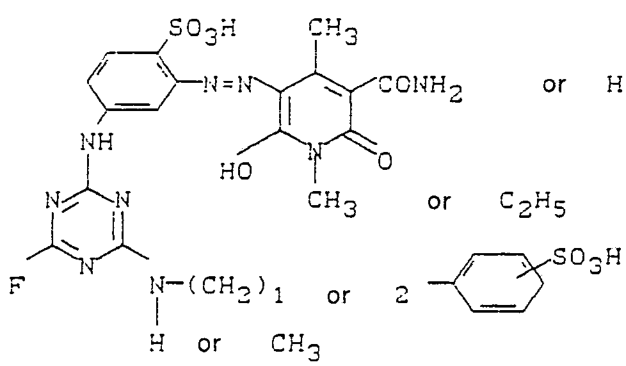

(6)

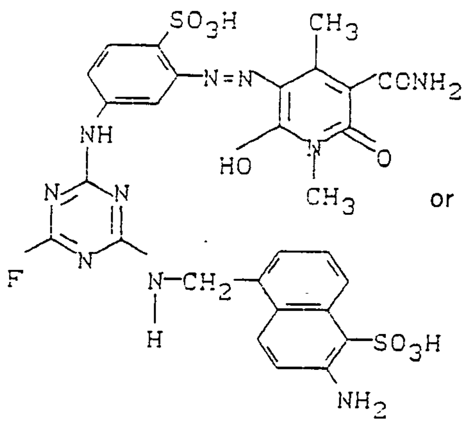 or H (7)

or $C_2H_5$

or

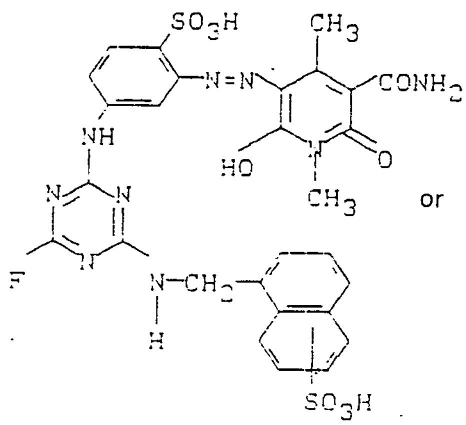 or H (8)

or $C_2H_5$

6. Use of the dyestuffs of Claims 1-5 for dyeing and printing materials containing hydroxyl and amide groups.

**Revendications**

1. Colorants de formule générale

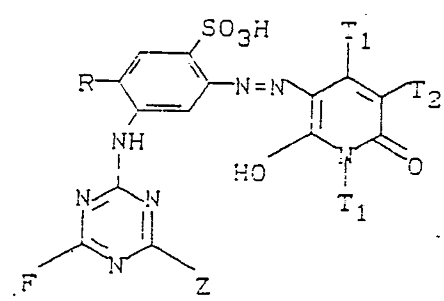 (I)

dans laquelle

les symboles $T_1$ représentent chacun, indépendamment l'un de l'autre, H, un groupe alkyle en $C_1$-$C_4$ éventuellement substitué par OH, $OCH_3$, $OC_2H_5$, $SO_3H$, $OSO_3H$, $NHCOCH_3$, Cl, CN, COOH, un groupe phényle éventuellement substitué par $CH_3$, $C_2H_5$, $OCH_3$, $SO_3H$, COOH, Cl, Br, $NHCOCH_3$, $NHCONH_2$,

$T_2$ = H, $CONH_2$, Cl, Br,

R = H, $CH_3$,

Z = $Z_1$, avec $Z_1$ = —$NR_1R_1$,

Z = $Z_2$, avec

$Z_2$ = 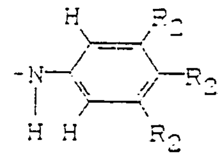

$Z = Z_3$, avec

$Z_3$ = 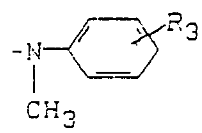

$Z = Z_4$, avec

$Z_4$ = 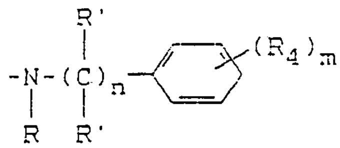

R ayant les significations indiquées ci-dessus, et R′ représente H ou un groupe alkyle à chaîne droite ou ramifiée,

$R_4 = NH_2$ ou $R_2$,

n = 1-4

m = 1-3,

$Z = Z_5$, avec

$Z_5$ = 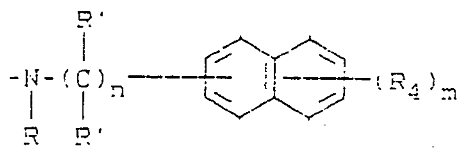

les symboles $R_1$ représentant chacun indépendamment l'un de l'autre, H, un groupe alkyle en $C_1$-$C_4$ éventuellement substitué par OH, $OCH_3$, $OC_2H_5$, $SO_3H$, $OSO_3H$, $NHCOCH_3$, Cl, CN, COOH ou bien

$NR_1R_1$ = 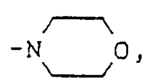,

$R_2$, $R_3$ = H, halogène, alkyle en $C_1$-$C_4$, alcoxy en $C_1$-$C_4$, acylamino, phénylamino éventuellement substitué par sulfo, $CH_3$ ou $OCH_3$, sulfo, carboxy, uréido,

$R_4 = NH_2$ ou $R_2$.

2. Colorants de la revendication 1, avec $T_1 = CH_3$ ou $C_2H_5$ ; R = H ; $T_2$ = H ou $CONH_2$, $Z = Z_1$, $Z_2$, $Z_3$, $Z_4$ ou $Z_5$.

3. Colorants de la revendication 2, dans lesquels l'un au moins des symboles $R_2$, $R_3$ ou $R_4$ représente un groupe sulfo.

4. Colorants des revendications 1 à 3, dans lesquels R′ = H.

5. Colorants de formule

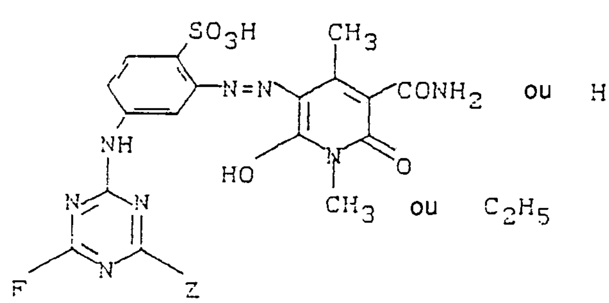

(2)

dans laquelle

Z a les significations indiquées dans la revendication 1,

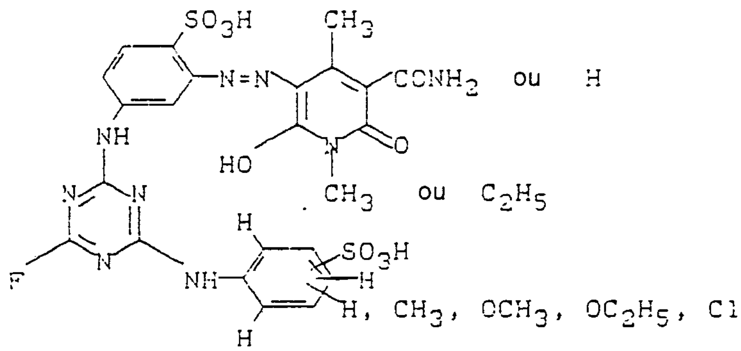

(3)

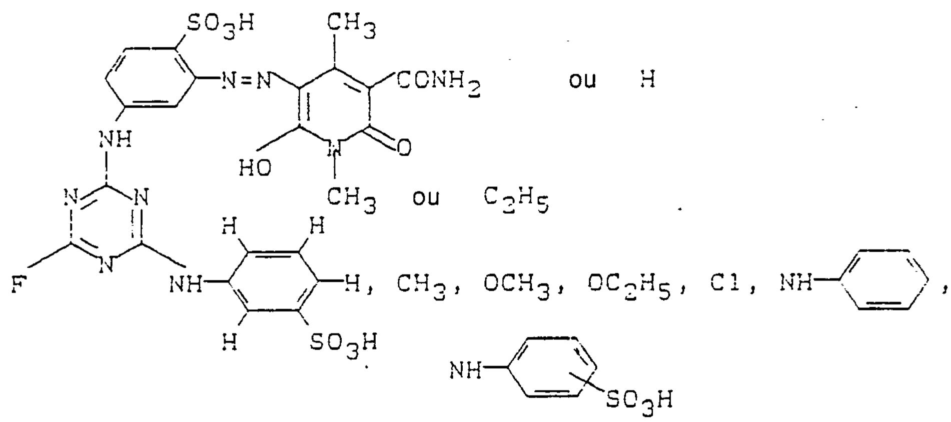

(4)

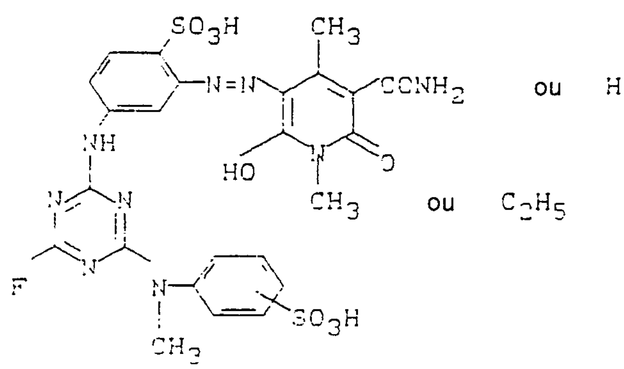

(5)

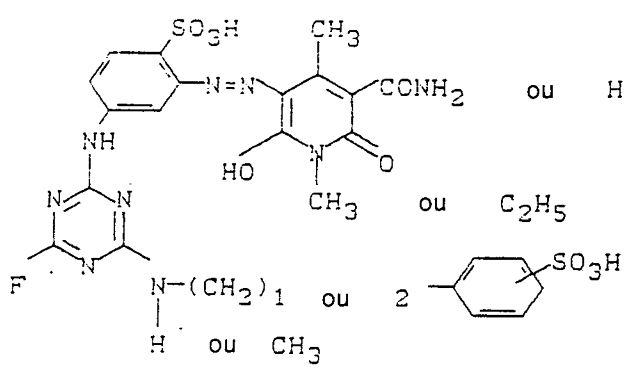

(6)

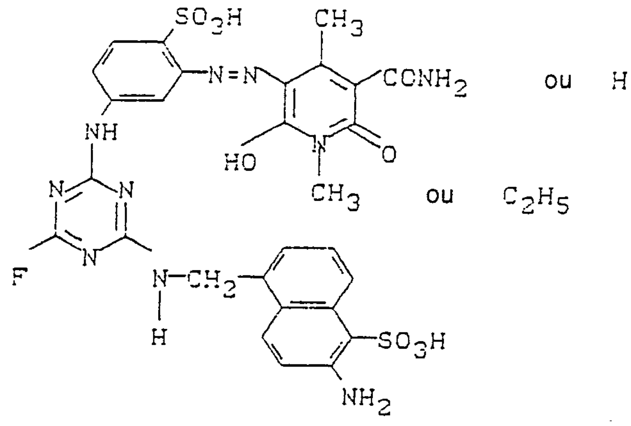


(7)

ou

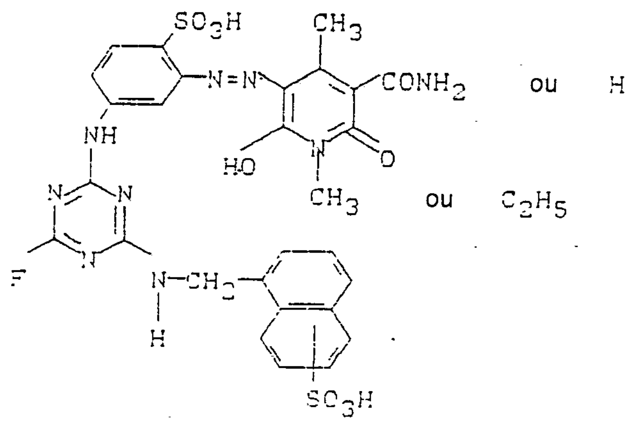


(8)

6. Utilisation des colorants des revendications 1 à 5 pour la teinture et l'impression de matières contenant des groupes hydroxy et des groupes amides.